(19) Europäisches Patentamt
European Patent Office
Office européen des brevets

(11) **EP 4 443 338 A1**

(12) **EUROPEAN PATENT APPLICATION**

(43) Date of publication:
**09.10.2024  Bulletin 2024/41**

(51) International Patent Classification (IPC):
**G06N 3/082** (2023.01)     **G06N 3/098** (2023.01)
**G06N 3/063** (2023.01)     G06N 3/0464 (2023.01)

(21) Application number: **24164989.6**

(22) Date of filing: **21.03.2024**

(52) Cooperative Patent Classification (CPC):
**G06N 3/098; G06N 3/063; G06N 3/082;**
G06N 3/0464

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.04.2023  IN 202311026165
14.09.2023  FI 20236024**

(71) Applicant: **Nokia Technologies Oy
02610 Espoo (FI)**

(72) Inventors:
• **CHATTERJEE, Soumyajit
Cambridge (GB)**
• **MATHUR, Akhil
London (GB)**

(74) Representative: **Nokia EPO representatives
Nokia Technologies Oy
Karakaari 7
02610 Espoo (FI)**

(54) **FEDERATED LEARNING**

(57)  Example embodiments relate to an apparatus, method and computer program relating to federated learning for computational models. In an example, an apparatus comprises means for determining, based on one or more resources of a client device, whether a first computational model architecture can be trained locally by the client device within a target training time. The apparatus may also comprise means for selecting, if the first computational model architecture cannot be trained locally by the client device within the target training time, a modified version of the first computational model architecture that can be trained by the client device within the target training time. The apparatus may also comprise means for providing the selected modified version of the first computational model architecture for local training by the client device.

FIG. 5

**Description**

**Field**

Example embodiments relate to an apparatus, method and computer program relating to federated learning for computational models.

**Background**

Federated learning is a machine learning (ML) method for generating a centralized, or global, computational model using decentralised training data.

An artificial neural network is an example of a computational model having a particular architecture or structure. The architecture may comprise an input layer, an output layer and one or more layers between the input and output layers. Layers may comprise one or more nodes performing particular functions, for example a convolutional layer. The architecture may be defined by a software algorithm.

A centralised computational model may be produced at a server based on decentralised, or local, training data accessible to a respective plurality of decentralised devices. The decentralised devices may, for example, be computer devices including, but not limited to, user devices and/or internet-of-things (IoT) devices.

The decentralised devices need not share their local training data with the server. The decentralised devices may train local computational models using their respective local training data to produce local model parameters. The local model parameters which may then be provided to the server.

The server may then generate a centralised computational model using the model parameters provided by each of the decentralized devices.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus, comprising: means for determining, based on one or more resources of a client device, whether a first computational model architecture can be trained locally by the client device within a target training time; means for selecting, if the first computational model architecture cannot be trained locally by the client device within the target training time, a modified version of the first computational model architecture that can be trained by the client device within the target training time; and means for providing the selected modified version of the first computational model architecture for local training by the client device.

The apparatus may further comprise means for providing the first computational model architecture to the client device in response to determining that the first computational model architecture can be trained locally by the client device within the target training time.

The apparatus may further comprise: means for estimating a total training time for the client device to train locally the first computational model architecture based on the one or more resources of the client device, wherein the determining means is configured to determine if the total training time for the client device is within the target training time. The term "within" includes "less than or equal to."

The apparatus may further comprise: means for identifying a plurality of client devices; wherein the estimating means is configured, for each client device in the plurality of client devices, to estimate a respective total training time; wherein the determining means is configured to determine, for each client device, whether the first computational model architecture can be trained locally by said client device within the target training time; wherein the selecting means is configured to select, for each client device that cannot be trained locally within the target training time, a respective modified version of the first computational model architecture that can be trained by the client device within the target training time; and wherein the providing means is configured to provide, to each client device that cannot be trained locally within the target training time, the respective modified version of the first computational model architecture.

The apparatus may further comprise: means for providing, to each client device that can train locally the first computational model architecture within the target training time, the first computational model architecture.

In some examples, the total training time for a respective client device may be estimated based at least partly on characteristics of one or more hardware resources of the respective client device.

In some examples, the one or more hardware resources may comprise at least one of the following: the respective client device's processing, memory or additional hardware unit resources.

In some examples, the total training time for the respective client device may be estimated based at least partly on: a number of multiply-and-accumulate, MAC, operations required to train the first computational model architecture;

and an estimated time taken to perform the number of MAC operations using the one or more hardware resources of the respective client device.

In some examples, the total training time for the respective client device may be estimated further based on one or more characteristics of the first computational model architecture. The one or more characteristics may comprise type(s) and/or number(s) of layers of the first computational model architecture which involve non-MAC operations. For example, the one or more characteristics may comprise number of pooling layers and/or batch normalisation layers.

In some examples, the total training time for the respective client device may be estimated further based on data indicative of a current utilization of the one or more hardware resources of the respective client device.

In some examples, the total training time for the respective client device is estimated based on use of an empirical model, trained based on resource profiles for a plurality of different client device types, wherein the empirical model is configured to receive as input: a time to train the identified computational model architecture using the one or more hardware resources of the respective client device; and the data indicative of current utilization of the one or more hardware resources of the respective client device, wherein the empirical model is configured to provide as output the estimated total training time for the respective client device.

A resource profile for a client device type may comprise data at least indicative of hardware resources of the particular client device type. For example, a resource profile may comprise data indicative of the presence of one or more of a client device's: processing resources (e.g. CPU); memory resources (e.g. RAM); and/or additional hardware unit resources (e.g. FPU, GPU, TPU).

A resource profile may also indicate characteristics thereof, such as speed, memory size, and/or any characteristic that is indicative of performance.

In some examples, at least some of the different client device types have different resource profiles, e.g. at least some hardware resources are different between different client device types. A client device type may refer to a particular make, model and/or version of a given client device and/or may refer to a particular format or function of the given client device. For example, a first client device type may comprise a smartphone, a second client device type may comprise a digital assistant and a third client device type may comprise a smartwatch.

In some examples, the modified version of the first computational model architecture may comprise at least one of the following: fewer hidden layers than the first computational model architecture; one or more convolutional layers with a reduced filter or kernel size than corresponding convolutional layers of the first computational model architecture; or fewer nodes in one or more layers than in corresponding layer(s) of the first computational model architecture.

In some examples, the selecting means may be configured to select the modified version of the first computational model architecture by: accessing one or more candidate modified versions of the first computational model, each having an associated training complexity; iteratively testing the candidate modified versions in descending order of complexity until it is determined that the client device can train locally a particular candidate modified version within the target training time; and selecting the particular candidate modified version as the modified version of the first computational model architecture.

The apparatus may further comprise: means for identifying, a client device of the plurality of client devices with a smallest capacity locally trained computational model; means for transmitting, to client device(s) of the plurality of client devices not having the smallest capacity computational model, an indication of the smallest capacity computational model for local re-training based on their respective locally trained computational model; means for receiving, from each client device not having the smallest capacity computational model, a respective second set of updated parameters representing the re-trained smallest capacity computational model; means for averaging or aggregating the first set of parameters from the client device having the smallest capacity computational model and the second sets of updated parameters; and means for transmitting, to each client device, the averaged or aggregated updated parameters.

In some examples, the indication of the smallest capacity computational model may comprise at least a first set of parameters and an indication of the structure of the smallest capacity computational model.

In some examples, the apparatus may comprise a server in communication with a plurality of client devices.

In some examples, the apparatus may comprise a client device in communication with a server. In some examples, the apparatus may further comprise: means for receiving the target training time from the server; and means for receiving from the server an indication of one or more candidate modified versions of the first computational model architecture, wherein the selecting means is configured to select the modified version of the first computational model architecture from the one or more candidate versions. In some examples, the apparatus may further comprise: means for receiving, from the server, an indication of a smallest capacity computational model; means for re-training of the smallest capacity computational model based on the locally trained computational model; means for transmitting, to the server, a respective second set of updated parameters representing the re-trained smallest capacity computational model; and means for receiving, from the server, averaged or aggregated updated parameters of the plurality of client devices representing a common computational model. In some examples, the apparatus may further comprise means for transmitting, to the server, a respective first set of parameters representing a locally trained computational model. In some examples, the apparatus may further comprise: means for inputting local training data to the common computational model; and means for re-training the locally trained computational model so that output data thereof matches the output data of the common computational model.

According to a second aspect, there is described an apparatus comprising: at least one processor; and at least one memory storing instructions that, when executed by the at least one processor, cause the apparatus at least to determine, based on one or more resources of a client device, whether a first computational model architecture can be trained locally by the client device within a target training time; select, if the first computational model architecture cannot be trained locally by the client device within the target training time, a modified version of the first computational model architecture that can be trained by the client device within the target training time; and provide the selected modified version of the first computational model architecture for local training by the client device.

According to a third aspect, there is described a method, comprising: determining, based on one or more resources of a client device, whether a first computational model architecture can be trained locally by the client device within a target training time; selecting, if the first computational model architecture cannot be trained locally by the client device within the target training time, a modified version of the first computational model architecture that can be trained by the client device within the target training time; and providing the selected modified version of the first computational model architecture for local training by the client device.

The method may further comprise providing the first computational model architecture to the client device in response to determining that the first computational model architecture can be trained locally by the client device within the target training time.

The method may further comprise estimating a total training time for the client device to train locally the first computational model architecture based on the one or more resources of the client device, wherein the determining comprises determining if the total training time for the client device is within the target training time. The term "within" includes "less than or equal to."

The method may further comprise identifying a plurality of client devices; wherein the estimating comprises, for each client device in the plurality of client devices, estimating a respective total training time; wherein the determining comprises determining, for each client device, whether the first computational model architecture can be trained locally by said client device within the target training time; wherein the selecting comprises selecting, for each client device that cannot be trained locally within the target training time, a respective modified version of the first computational model architecture that can be trained by the client device within the target training time; and wherein the providing comprises providing, to each client device that cannot be trained locally within the target training time, the respective modified version of the first computational model architecture.

The method may further comprise providing, to each client device that can train locally the first computational model architecture within the target training time, the first computational model architecture.

In some examples, the total training time for a respective client device may be estimated based at least partly on characteristics of one or more hardware resources of the respective client device.

In some examples, the one or more hardware resources may comprise at least one of the following: the respective client device's processing, memory or additional hardware unit resources.

In some examples, the total training time for the respective client device may be estimated based at least partly on: a number of multiply-and-accumulate, MAC, operations required to train the first computational model architecture; and an estimated time taken to perform the number of MAC operations using the one or more hardware resources of the respective client device.

In some examples, the total training time for the respective client device may be estimated further based on one or more characteristics of the first computational model architecture. The one or more characteristics may comprise type(s) and/or number(s) of layers of the first computational model architecture which involve non-MAC operations. For example, the one or more characteristics may comprise number of pooling layers and/or batch normalisation layers.

In some examples, the total training time for the respective client device may be estimated further based on data indicative of a current utilization of the one or more hardware resources of the respective client device.

In some examples, the total training time for the respective client device is estimated based on use of an empirical model, trained based on resource profiles for a plurality of different client device types, wherein the empirical model is configured to receive as input: a time to train the identified computational model architecture using the one or more hardware resources of the respective client device; and the data indicative of current utilization of the one or more hardware resources of the respective client device, wherein the empirical model provides as output the estimated total training time for the respective client device.

A resource profile for a client device type may comprise data at least indicative of hardware resources of the particular client device type. For example, a resource profile may comprise data indicative of the presence of one or more of a client device's: processing resources (e.g. CPU); memory resources (e.g. RAM); and/or additional hardware unit resources (e.g. FPU, GPU, TPU).

A resource profile may also indicate characteristics thereof, such as speed, memory size, and/or any characteristic that is indicative of performance.

In some examples, at least some of the different client device types have different resource profiles, e.g. at least some hardware resources are different between different client device types. A client device type may refer to a particular make, model and/or version of a given client device and/or may refer to a particular format or function of the given client device. For example, a first client device type may comprise a smartphone, a second client device type may comprise a digital assistant and a third client device type may comprise a smartwatch.

In some examples, the modified version of the first computational model architecture may comprise at least one of the following: fewer hidden layers than the first computational model architecture; one or more convolutional layers with a reduced filter or kernel size than corresponding convolutional layers of the first computational model architecture; or fewer nodes in one or more layers than in corresponding layer(s) of the first computational model architecture.

In some examples, the selecting may comprise selecting the modified version of the first computational model architecture by: accessing one or more candidate modified versions of the first computational model, each having an associated training complexity; iteratively testing the candidate modified versions in descending order of complexity until it is determined that the client device can train locally a particular candidate modified version within the target training time; and selecting the particular candidate modified version as the modified version of the first computational model architecture.

The method may further comprise identifying, a client device of the plurality of client devices with a smallest capacity locally trained computational model; transmitting, to client device(s) of the plurality of client devices not having the smallest capacity computational model, an indication of the smallest capacity computational model for local re-training based on their respective locally trained computational model; receiving, from each client device not having the smallest capacity computational model, a respective second set of updated parameters representing the re-trained smallest capacity computational model; averaging or aggregating the first set of parameters from the client device having the smallest capacity computational model and the second sets of updated parameters; and transmitting, to each client device, the averaged or aggregated updated parameters.

In some examples, the indication of the smallest capacity computational model may comprise at least a first set of parameters and an indication of the structure of the smallest capacity computational model.

In some examples, the method may be performed at a server in communication with a plurality of client devices.

In some examples, the method may be performed at a client device in communication with a server. In some examples, the method may further comprise: receiving the target training time from the server; and receiving from the server an indication of one or more candidate modified versions of the first computational model architecture, wherein the selecting comprises selecting the modified version of the first computational model architecture from the one or more candidate versions. In some examples, the method may further comprise: receiving, from the server, an indication of a smallest capacity computational model; re-training of the smallest capacity computational model based on the locally trained computational model; transmitting, to the server, a respective second set of updated parameters representing the re-trained smallest capacity computational model; and receiving, from the server, averaged or aggregated updated parameters of the plurality of client devices representing a common computational model. In some examples, the method may further comprise transmitting, to the server, a respective first set of parameters representing a locally trained computational model. In some examples, the method may further comprise: inputting local training data to the common computational model; and re-training the locally trained computational model so that output data thereof matches the output data of the common computational model.

According to a fourth aspect, there is described a computer program comprising instructions which, when executed by an apparatus, cause the apparatus to perform at least the following: determining, based on one or more resources of a client device, whether a first computational model architecture can be trained locally by the client device within a target training time; selecting, if the first computational model architecture cannot be trained locally by the client device within the target training time, a modified version of the first computational model architecture that can be trained by the client device within the target training time; and providing the selected modified version of the first computational model architecture for local training by the client device.

According to a fifth aspect, there is described a system comprising:

a first apparatus comprising:

means for identifying a plurality of client devices;
means for estimating a respective total training time for each client device in the plurality of client devices to train a first computational model architecture;
means for determining, for each client device in the plurality of client devices, whether the first computational model architecture can be trained within a target training time;
means for selecting, for each client device that cannot be trained locally within the target training time, a respective modified version of the first computational model architecture that can be trained by the client device within the target training time;

means for providing, to each client device that cannot be trained locally within the target training time, the respective modified version of the first computational model architecture;

means for identifying a client device of the plurality of client devices with a smallest capacity locally trained computational model;

means for transmitting, to client device(s) of the plurality of client devices not having the smallest capacity computational model, an indication of the smallest capacity computational model for local re-training based on their respective locally trained computational model;

means for receiving, from each client device not having the smallest capacity computational model, a respective second set of updated parameters representing the re-trained smallest capacity computational model;

means for averaging or aggregating the first set of parameters from the client device having the smallest capacity computational model and the second sets of updated parameters; and

means for transmitting, to each client device, the averaged or aggregated updated parameters; and

a second apparatus comprising:

means for receiving, from the first apparatus, the indication of the smallest capacity computational model;

means for re-training the smallest capacity computational model based on a locally trained computational model;

means for transmitting, to the first apparatus, the respective second set of updated parameters representing the re-trained smallest capacity computational model;

means for receiving, from the first apparatus, averaged or aggregated updated parameters representing a common computational model; and

means for re-training the locally trained computational model based on the common computational model.

According to a sixth aspect, there is described a system comprising:

a server configured to perform a method according to the third aspect;
a plurality of client devices in communication with the server.

## Drawings

Example embodiments will be described with reference to the accompanying drawings, in which:

FIG. 1 is a block diagram of a federated learning system 100 which may be useful for understanding example embodiments;

FIG. 2 is a flow diagram showing operations according to one or more example embodiments;

FIG. 3 is a block diagram of a system according to one or more example embodiments;

FIG. 4 is a schematic view of a neural network pool according to one or more example embodiments;

FIG. 5 is a further flow diagram showing operations according to one or more example embodiments;

FIG. 6 is a further flow diagram showing operations according to one or more example embodiments;

FIG. 7 is a further flow diagram showing operations according to one or more example embodiments;

FIG. 8 is a block diagram of an apparatus that may be configured according to one or more example embodiments;

FIG. 9 is a view of an example medium that may store instructions which, when executed by an apparatus, may cause the apparatus to carry out one or more example embodiments.

## Detailed Description

Example embodiments relate to an apparatus, method and computer program relating to federated learning for computational models.

The term "computational model" as used herein may refer to any form of trained computational model. The computational model may be trained using data to generate learned parameters for use in a subsequent inference process.

For ease of explanation, the term "model" may be used hereinafter in place of "computational model."

An artificial neural network, hereafter "neural network", is an example of a model, but other forms of model may be applicable. A neural network is a computational algorithm that can be defined in terms of an architecture. The architecture may define one or more of: number of layers, number of nodes in one or more of the layers, how particular nodes relate to other nodes, or what computations each node or layer of nodes performs. The list is non-exhaustive.

For example, the architecture may comprise a plurality of layers, usually an input layer, an output layer and one or more other layers between the input and output layers. The other layers may be termed hidden layers. The layers may comprise one or more nodes, which may perform a certain function or functions, and the nodes may be interconnected with one or more nodes of other layers thereby defining input and/or output relationships between the nodes. Models, such as neural networks, are associated with a set of learnable parameters, e.g. trainable weights and biases. The architecture and the learnable parameters determine an output of the model for a given input.

Some layers may perform functions such as convolutional filtering in which a filter may have a certain kernel size.

There are various known types of neural network, including feed-forward neural networks, perceptron neural networks, convolutional neural networks, recurrent neural networks, deep neural networks, and so on. Each type may be more appropriate for a particular application or task, such as image classification, voice recognition and/or health-based analytics, although example embodiments are not limited to any particular type of model, neural network, application or task.

Federated learning is a machine learning (ML) method in which a model, such as a neural network, may be generated or derived at a centralized device based on local training data held at, or accessible to, each of a plurality of client devices remote from the centralized device. For example, the centralized device may be a server and the plurality of client devices may be connected to the server via a network. Example embodiments are not necessarily limited to use of these types or forms of device although they may be described herein as examples.

The local training data may not be accessible to the server, thereby ensuring anonymity and security.

Rather, each client device may train locally a model using its respective local training data. After a suitable training time, usually specified in terms of a time period, respective sets of learned parameters (usually representing weights and/or biases) of the local models may be provided to the server.

The server may then generate or derive its centralized model based on the collective sets of parameters received from the plurality of client devices.

In some cases, the centralized model may be transmitted back to at least some of the client devices for updating their respective local models.

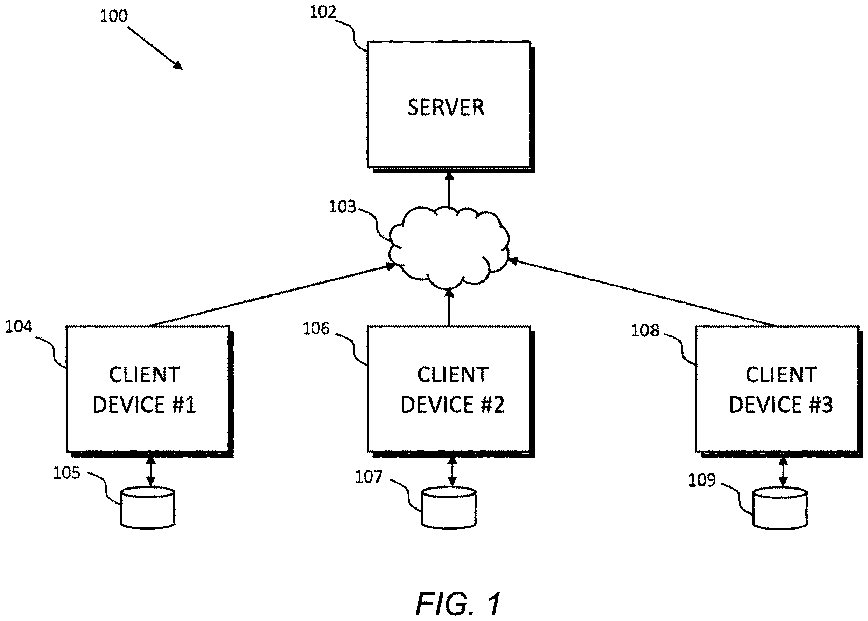

FIG. 1 is a block diagram showing a federated learning system 100 which may be useful for understanding example embodiments.

The federated learning system 100 may comprise a server 102 connected via a network 103 to first, second and third client devices 104, 106, 108. Although three client devices 104, 106, 108 are shown in FIG. 1, in other examples, the number of devices may be any number of two or more devices.

The network 103 may comprise any form of data network, such as a wired or wireless network, including, but not limited to, a radio access network (RAN) conforming to 3G, 4G, 5G (Generation) protocols or any future RAN protocol. Alternatively, the network 103 may comprise a WiFi network (IEEE 802.11) or similar, other form of local or wide-area network (LAN or WAN) or a short-range wireless network utilizing a protocol such as Bluetooth or similar.

The server 102 may comprise any suitable form of computing device or system that is capable of communicating with the first, second and third client devices 104, 106, 108.

The first, second and third client devices 104, 106, 108 may each comprise any suitable form of computing device, usually comprising one or more processors, e.g. including a central processing unit (CPU), one or more memories, such as main memory or random access memory (RAM), and possibly one or more additional hardware units such as one or more floating-point units (FPUs), graphics processing units (GPUs) and tensor processing units (TPUs).

The first, second and third client devices 104, 106, 108 may, for example, comprise one of a wireless communication device, smartphone, desktop computer, laptop, tablet computer, smart watch, smart ring, digital assistant, AR (augmented reality) classes, VR (virtual reality) headset, vehicle, or some form of internet of things (IoT) device which may comprise one or more sensors.

The first, second and third client devices 104, 106, 108 may have respective data sources 105, 107, 109 storing or generating a set of local training data $D_{Local}^{n}$, i.e. where n = 1, ..., N and N is the number of client devices. In this example, N = 3. The sets of local training data stored by the respective data sources 105, 107, 109 may be used for local training of a model at each of the respective client devices 104, 106, 108.

For example, the respective sets of local training data $D_{Local}^{n}$ may be raw data generated by one or more sensors of the first, second and third client devices 104, 106, 108, or one or more sensors in communication with the first, second and third client devices.

For example, a sensor may comprise one or more of microphones, cameras, temperature sensors, humidity sensors, proximity sensors, motion sensors, inertial measurement sensors, position sensors, heart rate sensor, blood pressure sensor and so on.

The first, second and third client devices 104, 106, 108 may each be capable of training a respective model using a particular model architecture. Training may use known training methods, for example one of supervised, semi-supervised, unsupervised and reinforcement learning methods. In supervised learning, gradient descent is an algorithm that may be used for minimising a cost function and hence update parameters of a model. Training may use the local training data $D_{Local}^n$ stored in the respective data sources 105, 107, 109 of the first, second and third client devices 104, 106, 108. In some cases, one or more of the first, second and third client devices 104, 106, 108 may train a model using a different architecture than that of the other client devices.

At least one of the first, second and third client devices 104, 106, 108 may have different resources to those of the other client devices. It may be that each of the client devices 104, 106, 108 has different respective resources relative to other client devices.

"Resources" may mean one or both of:

(i) a client device's hardware resources; and
(ii) current utilization of those hardware resources.

Such resources may determine if a particular neural network architecture can be trained within a so-called target time $\delta$, to be described later on.

The term "trained" as used herein may mean "fully trained" in the sense that the particular neural network architecture is trained using a predetermined number of training epochs. An epoch refers to one pass of training data through a machine learning model, e.g., so that each data item or sample in a set of training data has had an opportunity to update model parameters. In the case where the training data is separated into a plurality of batches, an epoch may refer to one pass of a batch of the training data.

Hardware resources may refer to at least part of the computational capability of a particular device, for example a particular one of the first, second and third client devices 104, 106, 108. For example, hardware resources of a particular client device may include the CPU, main memory or RAM, and FPUs, GPUs and TPUs (if provided) and their respective characteristic(s). Characteristics may refer to one or more properties, e.g. a technical specification, of a particular hardware resource. In combination, the indicate a computational capability of the particular device.

In some example embodiments, hardware resource information may be accessible from a device or hardware profile stored by each of the first, second and third client devices 104, 106, 108 and/or which can be accessed via a remote service providing hardware resource information for a particular client device based on, e.g. a provided model number or serial number.

Hardware resources may include a CPU, having characteristics of a specified clock speed, number of cores, number of cycles required to perform a multiply-and-accumulate (MAC) operation and so on. Additionally, or alternatively, hardware resources may include a main memory or RAM, having characteristics of a specified capacity (e.g. 8 GB, 16 GB or 32 GB), technology type (dynamic RAM (DRAM) or static RAM (SRAM)), frequency, memory bandwidth, overclocking support and so on.

Other hardware resources, as mentioned above, may comprise FPUs, GPUs and TPUs with respective characteristics indicative of their typical or potential performance.

Current utilization of a hardware resource may refer to how one or more of the hardware resources are being used at a particular time, for example a load on a particular resource when a request for current utilization information is made. Current utilization may be specified in terms of a percentage or proportion, e.g. 4% of CPU, 17% of RAM, and 3% of GPU. The higher the current utilization of a hardware resource, the less capable it may be for performing new tasks in a given time frame.

Referring still to FIG. 1, and by way of example, the first client device 104 may comprise a smartphone with a relatively powerful CPU, large RAM and a GPU, the second client device 106 may comprise a digital assistant with a less powerful CPU, medium size RAM and no GPU, and the third client device 108 may comprise a smartwatch with an even less powerful CPU, medium size RAM and no GPU.

Each of the first, second and third client devices 104, 106, 108 therefore have different resources affecting their ability to train a particular model architecture within a given target training time $\delta$. It may be assumed that, based on hardware resources alone, the first client device 104 will train a particular model architecture faster than the second and third client devices 106, 108. However, current utilization of the hardware resources of the first client device 104 may change this.

The target training time $\delta$ is a deadline imposed on client devices, such as the first, second and third client devices 104, 106, 108, to train locally their respective models using respective model architecture. The target training time $\delta$ may be driven by one or more factors, including mobility of the client devices, their power supply and/or connectivity.

This leads to a real-world trade-off between latency and accuracy which may be difficult to manage. Where accuracy is important, one or more client devices with less resources, such as the second and third client devices 106, 108, may become a bottleneck for a federated training process. Some management methods may involve dropping (i.e. removing) client devices from the federated learning process if they are likely not to meet the target training time $\delta$. This

may be the case if their resources are such that the required accuracy or number of training epochs cannot be performed within the target training time $\delta$. Another method may involve configuring such resource-restricted client devices to perform fewer training epochs. The first method discriminates against certain types of client device, which may lead to under-representation of certain types or classes of client device, which in turn may reduce the accuracy of the centralised model. Client device ownership may be correlated with certain geographical or social-economic attributes of end users, and it may be considered more appropriate for centralized models to be fair to a range of different client devices having different resources. The second method may result in partially trained (and therefore less accurate) models.

Example embodiments may provide an apparatus, method, system and computer program for federated learning which at least mitigates such limitations.

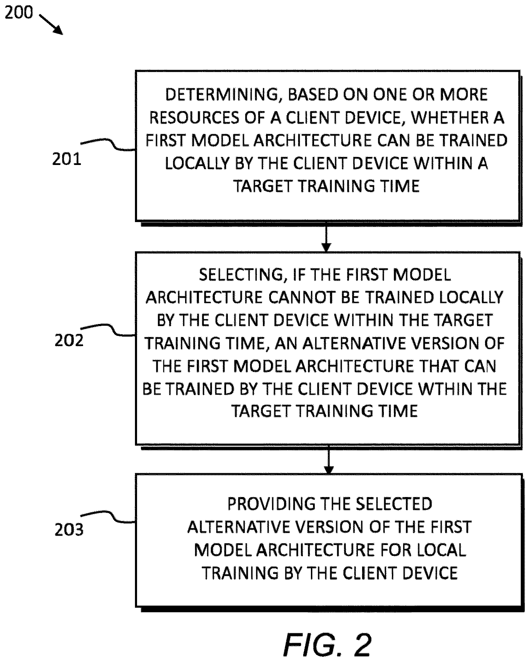

FIG. 2 is a flow diagram of operations 200 that may be performed, e.g. by an apparatus, according to one or more example embodiments. The operations may be processing operations performed by hardware, software, firmware or a combination thereof. The shown order is not necessarily indicative of the order of processing. The apparatus may comprise, or at least include, one or more means for performing the operations, wherein the means may comprise one or more processors or controllers which, when executing computer-readable instructions, may cause said operations to be performed.

A first operation 201 may comprise determining, based on one or more resources of a client device, whether a first model architecture can be trained locally by the client device within a target training time $\delta$.

As mentioned above, the term "trained" in this context means fully trained using a predetermined number of training epochs.

A second operation 202 may comprise selecting, if the first model architecture cannot be trained locally by the client device within the target training time $\delta$, a modified version of the first model architecture that can be trained by the client device within the target training time $\delta$.

A third operation 203 may comprise providing the selected modified version of the first computational model architecture for local training by the client device.

The term "providing" may mean transmitting, using or initiating, in this case the selected modified version of the first model architecture.

The operations 200 may be performed at a centralised device in a federating learning system, such as at the server 102 of the system 100 shown in FIG. 1. Example embodiments may focus on such a scenario.

However, as mentioned later on, the operations 200 may alternatively be performed at one or each of a plurality of client devices used in such a system, such as at the first, second and third client devices 104, 106, 108 of the system 100 shown in FIG. 1.

The target training time $\delta$ is a deadline imposed on client devices, such as the first, second and third client devices 104, 106, 108 of the system 100 shown in FIG. 1, to train their respective neural networks to a particular measurable accuracy and/or using a predetermined number of training epochs. The target training time $\delta$ may be defined in terms of an actual time, e.g. two weeks, and/or in terms of a number of training epochs, e.g. one hundred thousand epochs. The target training time $\delta$ may be a user-defined parameter, which may be tuneable, or one that is set or recommended based on a particular application or task that the centralized model is to perform during inference. Additionally, or alternatively, the target training time $\delta$ may be set by an infrastructure provider. Additionally, or alternatively, the target training time $\delta$ may be based on an average of the total training times for each of the client devices, such as the first, second and third client devices 104, 106, 108 of the system 100 shown in FIG. 1, to train locally the first model architecture, e.g. to a required measurable accuracy.

Other operations may comprise estimating a total training time for the client device to train locally the first model based on the one or more resources of the client device, wherein the second operation (202) may comprise determining if the total training time for the client device is within (e.g. less than or equal to) the target training time $\delta$.

Example embodiments may therefore involve providing one or more modified computational models architecture to at least some of the client devices, such as at the first, second and third client devices 104, 106, 108 of the system 100 shown in FIG. 1 to ensure that they can be fully trained within the target training time $\delta$.

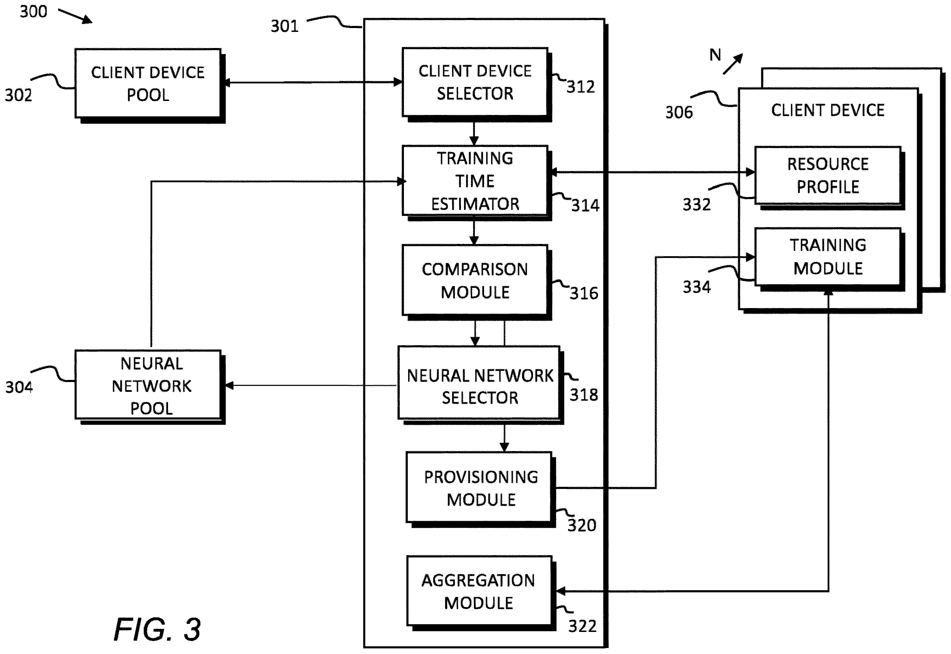

Fig. 3 is a block diagram of a system 300 for performing a federated learning process according to one or more example embodiments. In this case, neural network(s) are used as an example form of model.

The system 300 comprises a server 301, a client device pool 302 and a neural network pool 304. The system 300 also comprises a particular client device 306 of a plurality N of client devices, for ease of explanation.

The server 301 in this example may perform the operations described above with reference to FIG. 2.

The server 301 may comprise functional modules, which may be implemented in hardware, software, firmware or a combination thereof.

The functional modules may comprise a client device selector 312, a training time estimator 314, a comparison module 316, a neural network selector 318, a provisioning module 320 and an aggregation module 322.

The client device selector 312 may be configured to select a plurality N of client devices from the client device pool 302. The selected plurality N of client devices may comprise client devices having various resources to ensure that a variety of different client device types are used as part of a federated training process.

For example, as in the example mentioned above for FIG. 1, a selected first client device may comprise a smartphone with a relatively powerful CPU, large RAM and a GPU, a selected second client device may comprise a digital assistant with a less powerful CPU, medium size RAM and no GPU, and a selected third client device may comprise a smartwatch with an even less powerful CPU, medium size RAM and no GPU.

In other examples, a larger number of client devices may be selected by the client device selector 312.

The training time estimator 314 may be configured to estimate a total training time, $T_T$, for each selected client device with regard to a first neural network architecture.

Although the following description may refer to the particular client device 306, it will be appreciated that same or similar operations may be performed on other selected client devices of the plurality N of client devices.

The first neural network architecture may be a target neural network architecture which provides a base or reference architecture, for example one which is known to be particularly suited to a target application or task such as image or audio classification.

The training time estimator 314 may be configured estimate the total training time, $T_T$, for each client device, e.g. including the particular client device 306, based at least partly on one or more hardware resources of said client device.

For example, taking the particular client device 306, the training time estimator 314 may have access to reference information for the particular type and/or model of the client device, which reference information informs about its hardware resources.

Additionally, or alternatively, the training time estimator 314 may access a resource profile 332 stored at the particular client device 306 which informs about its hardware resources.

The hardware resources of the particular client device 306 may inform as to the presence and/or characteristics of one or more of the client device's processing resources (e.g. CPU), memory resources (e.g. RAM) and additional hardware unit resources (e.g. FPU, GPU, TPU).

For example, the training time estimator 314 may estimate the total training time, $T_T$, based at least partly on a value $T_{MAC}$ which represents a total time to perform a number of MAC operations required to train the first neural network architecture, $N_{MAC}$. The value of $T_{MAC}$ may be computed based on an estimated time taken to perform one MAC operation, $T_{perMAC}$, using the one or more hardware resources of the particular client device 306. In other words:

$$T_{MAC} = N_{MAC} \times T_{perMAC}$$

For example, the number of MAC operations, $N_{MAC}$, may be provided as reference information and/or may be derivable based on the number of layers and/or types of layers. The number of MAC operations, $N_{MAC}$, may be an aggregation of the number of MAC operations for multiple layers (e.g. $N_{MAC} = N_{MAC\ Layer\ 1} + N_{MAC\ Layer\ 2} \ldots$). Based on knowledge of the hardware resources of the particular client device 306, for example the number of CPU cycles required per MAC operation, $N_{CPU\ Cycles/MAC}$, the time required to perform a MAC operations, $T_{MAC}$, may be calculated as this value, multiplied by the number of MAC operations, $N_{MAC}$, divided by the clock speed of the CPU, $F_{CPU}$; (i.e. $T_{MAC} = N_{MAC} \times N_{CPU\ Cycles/MAC} \times \frac{1}{F_{CPU}}$).

The training time estimator 314 may estimate the total training time based also on the time taken to perform non-MAC operations, $T_{NON-MAC}$ which may be calculated in a similar manner and may equal the time taken for all non-MAC operations.

For this purpose, the particular client device 306 may store, e.g. as part of its firmware, a set of reference data representing or indicative of time taken for performing non-MAC operations given the particular type of processor or CPU, on a per-operation basis for that CPU. For example the reference data may be in the form of a table as follows:

Table 1: Reference data for non-MAC operations

| Processor Type | Operation | Time for Non-MAC Operations |
|---|---|---|
| X123 | Pooling Layer | 0.5 s |
| | Batch Normalisation | 0.2 s |
| | ... | ... |

In this example, if the first neural network architecture comprises three pooling layers and one batch normalisation layer, the value of $T_{NON-MAC}$ will be 3(0.5) + 0.2 = 1.7 s.

The reference data may be provided to the training time estimator 314.

Additionally, or alternatively, the server 301 or some other centralized resource may store reference data for a plurality of different processors or CPUs, and the training time estimator 314 may, based on knowledge of the particular processor or CPU of the particular client device 306, which may be reported by said particular client device, determine the value of $T_{NON\text{-}MAC}$.

Batch normalization and max pooling layers may not involve MAC operations.

In order to obtain the above reference data, empirical estimations, i.e. based on observations and/or measurements may be performed on different types of hardware, e.g. processors, to determine the times taken for Non-MAC Operations for different types of operation.

From this, an estimate of the total training time, $T_T$, based on the hardware resources of the client device 306, for example including the presence and characteristics of the additional hardware unit resources, may be calculated. In this case:

$$T_T = T_{MAC} + T_{NON\text{-}MAC}$$

In some example embodiments, the training time estimator 314 may estimate the total training time, $T_T$, based also on a current utilization of the one or more hardware resources of each client device, including the particular client device 306.

Current utilization may refer to the load on the one or more hardware resources when performing other tasks.

In this case, the total training time $T_T$ for the particular client device 306 may be given as:

$$T_T = T_{MAC} + T_{NON\text{-}MAC} + T_2$$

where $T_2$ is an additional time (delay) due to current utilization of, or load on, the one or more hardware resources.

The value of $T_T$ may be estimated by use of a trained computational model that receives as input the values of $T_{MAC}$, $T_{NON\text{-}MAC}$, and current utilization values for one or more hardware resources, and which outputs the value of $T_T$. The trained computational model may be an empirical model, for example a regressor, which has been trained using prior empirical estimations. In this case, the value of $T_T$ may be expressed as:

$$T_T = (\beta_1 \times T_{MAC}) + (\beta_2 \times \text{Utilisation}) + (\beta_3 \times T_{NON\text{-}MAX}) + C$$

Where $\beta_1$, $\beta_2$, $\beta_3$ and C are trainable parameters of the regressor.

The comparison module 316 may be configured to compare the value of $T_T$ for the particular client device 306 with the target training time $\delta$ as referred to above.

At this stage, if a value of target training time $\delta$ has not been set, e.g. by a user or using reference information, it may be set based on a simple average of all values of $T_T$ for each of the selected client devices.

If the value of $T_T$ is less than, or equal to, $\delta$, which may be termed a positive determination, the comparison module 316 provides a suitable signal or message to the provisioning module 320. The provisioning module 320 is configured in this case to provide, e.g. send information indicating the first neural network architecture to the particular client device 306 for local training on a training module 334 thereof. The information indicating the first neural network architecture may comprise, for example an indication of:

> layer structure, e.g. layer 1 has 4 nodes, layer 1 is connected to layer 2, layer 2 has 6 nodes, etc.; and
> weights for each connection.

For a neural network that is not yet trained, the weights can be randomly initialised.

The training module 334 of the particular client device 306 may be configured to train neural networks using local training data.

If the value of $T_T$ is greater than the target training time $\delta$, which may be termed a negative determination, the comparison module 316 provides a suitable signal or message to the neural network selector 318.

The neural network selector 318 may be configured to select a modified neural network architecture from the neural network pool 304.

The selected modified neural network architecture may be tested in a comparable way to the first neural network architecture, by first using the training time estimator 314 to estimate a new total training time $T_{T+1}$ for the particular client device 306 in the manner described above. Then, the comparison module 316 may compare the value of the new total training time $T_{T+1}$ with the target training time $\delta$ to determine if the selected modified neural network architecture can be trained within the target training time $\delta$.

In the event of a positive determination, the provisioning module 320 is configured to provide the modified neural network architecture to the particular client device 306 for local training on the training module 334.

In the event of a negative determination, the comparison module 316 may be configured to provide a suitable signal or message to the neural network selector 318 and the process repeats for another modified neural network architecture until a positive determination is made.

The above operations performed by the server 301 may be performed for each of the plurality N of client devices, additional to the particular client device 306, as selected by the client device selector 312. This may be a sequential or parallel process.

At the conclusion of what may be termed a provisioning process, each of the plurality N of selected client devices is in a state where they can fully train a neural network within the target training time $\delta$ using respective sets of local training data.

The purpose and operation of the aggregation module 322 shown in FIG. 3 will be described later on.

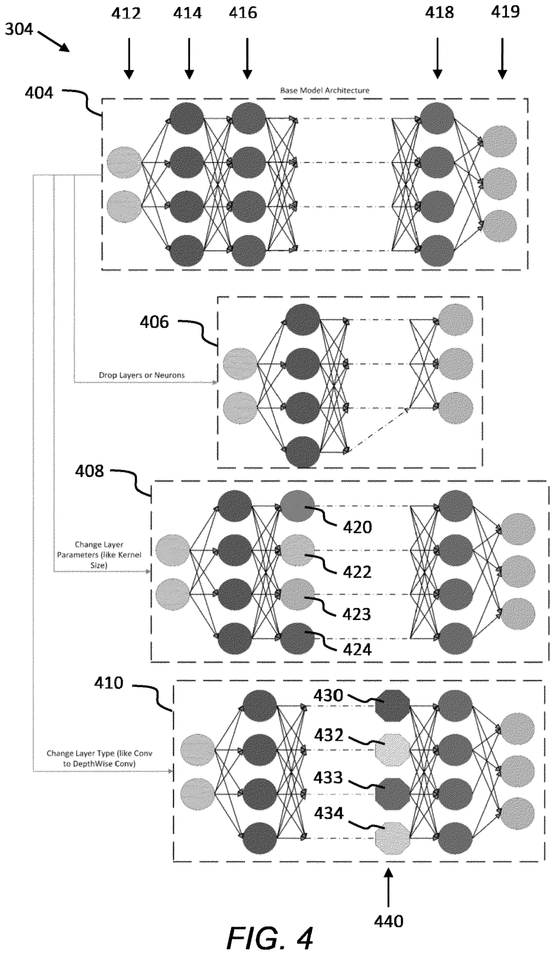

FIG. 4 is a schematic view of an example neural network pool 304.

The neural network pool 304 may comprise one or more storage means, possibly provided as part of a computer system, which stores data corresponding to modified neural network architectures for selection by the neural network selector 318.

The neural network pool 304 may be external to the server 301, e.g. a cloud service, or in some example embodiments, the neural network pool may comprise part of the server 301 or may even be provided on one or more client devices, e.g. on one of the N client devices.

The neural network pool 304 shows, in partial view, first, second, third and fourth neural network architectures 404, 406, 408, 410.

The first neural network architecture 404 may be the same as the first neural network architecture referred to above, and represents a base or target neural network architecture for performing a particular application or task.

The second, third and fourth neural network architectures 406, 408, 410 are modified neural network architectures based on the first neural network architecture 404. The second, third and fourth neural network architectures 406, 408, 410 may have the same number of nodes in their respective input and output layers, which obviates changing data formats when interchanging the neural network architectures. The second, third and fourth neural network architectures 406, 408, 410 may be termed candidate modified neural network architectures.

The second, third and fourth neural network architectures 406, 408, 410 are modified versions of the first neural network architecture 404 in the sense that, as well as being suitable for the same task as the first neural network architecture, only a subset of features (e.g. layers, types of layer, number of nodes, interconnections) of the first neural network architecture are modified in some way. For avoidance of doubt, modifying may comprise removing one or more layers, reducing a filter or kernel size of a convolutional layer and/or using fewer nodes in one or more layers, relative to the first neural network architecture 404.

The first neural network architecture 404 may be one that is known in the public domain and may be known by a name or label, such as the ResNet-50 neural network which is a fifty layer convolutional neural network used for image classification. ResNet-50 comprises forty-eight convolutional layers, one MaxPool layer and one average pool layer.

The first neural network architecture 404 is shown in FIG. 4 for reference.

The first neural network architecture 404 in some cases may not be provided in the neural network pool 304 and only modified versions, such as the second, third and fourth neural network architectures 406, 408, 410 may be provided in the neural network pool 304.

The first neural network architecture 404 may comprise a first (input) layer 412 comprising two neurons, a second, third and fourth layer 414, 416, 418 each comprising four neurons, and a fifth (output) layer 419 comprising two neurons. One or more further layers may be provided between the third and fourth layers 416, 418. Each of the second to fourth layers 414, 416, 418 may have different characteristics, e.g. some may be convolutional layers, average pool layers, fully connected layers and so on.

The second neural network architecture 406 is another modified version; it will be seen that, relative to the first neural network architecture 404, one or more layers have been dropped (i.e. removed), specifically the second and fourth layers 414, 418. This will result in less training complexity and hence will reduce the total training time for the second neural architecture 406 relative to the first neural network architecture 404.

The third neural network architecture 408 is another modified version; it will be seen that, relative to the first neural network architecture 404, neurons 420, 422, 423, 424 of the third layer 416, which may be a convolutional layer, have been modified to provide a smaller filter or kernel size. This will also result in less training complexity and hence will reduce the total training time for the third neural network architecture 408 relative to the first neural network architecture 404 and possibly the second neural network architecture 406.

The fourth neural network architecture 410 is another modified version; it will be seen that, relative to the first neural network architecture 404, neurons 430, 432, 433, 434 of a further (hidden) third layer 440, which may be a convolutional layer, have been modified from a standard convolutional layer to a depth-wise convolutional layer. This may also result in less training complexity and hence will reduce the total training time for the fourth neural architecture 410 relative to the first neural network architecture 404 and possibly the second and third neural network architectures 406, 408.

The second, third and fourth neural network architectures 406, 408, 410 may be defined using iterative modifications made to the first neural network architecture 404.

There may be only a limited number of modifications that can be made whilst keeping the same number of nodes (in respective input and output layers) as those of the first neural network architecture 404. Different convolution layer configurations (kernel size, stride, etc.) may generate different feature map dimensions, and only a limited number of configurations may keep the feature map dimensions the same.

In some examples, the first neural network architecture 404 may also be modified to remove "blocks". A block may comprise more than one layer. For example, taking the VGG16 model architecture as another example of a first neural network architecture, a block may comprise one or more convolutional layers and a pooling layer.

The above-described iterative modifications may utilize different orders of operation, e.g.:

- reduce number of layers or blocks, reduce number of layers or blocks, etc.; or
- reduce number of layers or blocks; reduce kernel size, reduce number of layers or blocks, etc.

Although the number of MAC operations may be reduced by such modifications, there may also be provided testing stage in which some baseline training is performed using each of the second, third and fourth neural network architectures 406, 408, 410 to derive more accurate estimates of training complexity, e.g. in terms of respective training times.

Each of the second, third and fourth neural network architectures 406, 408, 410 may have an associated training complexity, which may be a numeral value, stored in the neural network pool 304 or by the neural network selector 318.

Referring back to FIG. 3, the neural network selector 318 may be configured to iterate through the modified neural network architectures, e.g. the second, third and fourth neural network architectures 406, 408, 410 randomly or, alternatively, in descending order of complexity.

In this way, the modified neural network architecture that is selected by the neural network selector 318 may be optimised in terms of being most similar to the first neural architecture 404 in terms of training complexity, or has less significant modifications relative to the first neural network architecture, whilst being able to meet the target training time $\delta$.

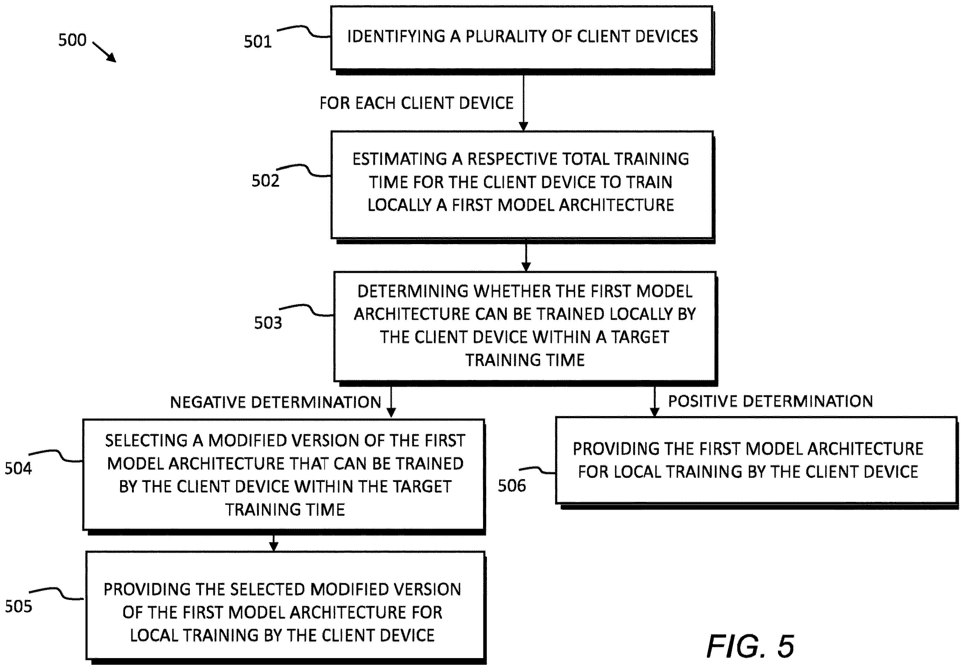

FIG. 5 is a flow diagram of operations 500 that may be performed according to one or more example embodiments. The operations 500 may, for example, be performed by the server 301. The operations may be processing operations performed by hardware, software, firmware or a combination thereof. The shown order is not necessarily indicative of the order of processing. The server 301 may comprise, or at least include, one or more means for performing the operations, wherein the means may comprise one or more processors or controllers which, when executing computer-readable instructions, may cause said operations to be performed.

A first operation 501 may comprise identifying a plurality N of client devices.

Subsequent operations may be performed for each identified client device.

A second operation 502 may comprise estimating a respective total training time for the client device to train locally a first model architecture.

A third operation 503 may comprise determining whether the first model architecture can be trained locally by the client device within a target training time $\delta$.

A fourth operation 504, which may follow a negative determination, may comprise selecting a modified version of the first model architecture that can be trained by the client device 306 within the target training time $\delta$. This may follow the iterative approach mentioned above.

A fifth operation 505, which may follow the fourth operation 504, may comprise providing the selected modified version of the first model architecture for local training by the client device 306.

A sixth operation 506, which may follow a positive determination in the third operation 503, may comprise providing the first computational model architecture for local training by the client device 306.

It follows that by performing the above operations 500, for each of the plurality of client devices identified in the first operation 501, said client devices may, or are more likely to, fully train a respective computational model architecture using their own respective training data within the target training time δ. As a result, it is more likely that the client device will contribute to the Federated Learning process.

A process of computational model aggregation may then follow.

This may be performed, at least in part, by the aggregation module 322 shown in FIG. 3. In this respect, standard methods of aggregating multiple local trained models may not be appropriate or accurate because of the use of multiple different model architectures across the plurality N of client devices.

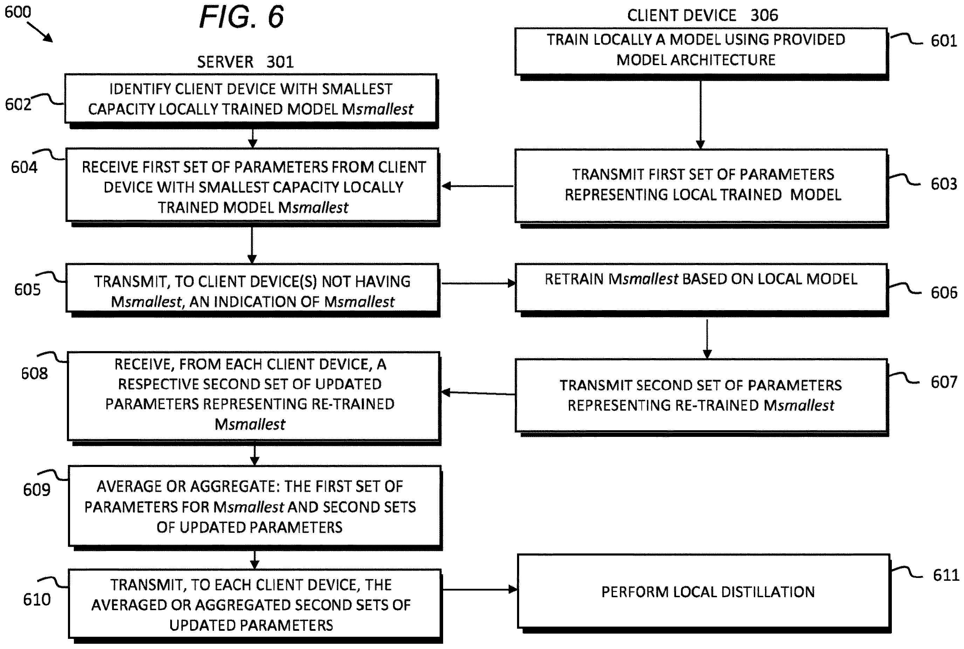

Example embodiments may therefore involve a process to be explained below, with reference to FIG. 6.

FIG. 6 is a flow diagram of operations 600 that may be performed according to one or more example embodiments.

A subset of the operations may be performed at the server 301 and another subset of the operations may be performed at each client device. As above, we will refer to the particular client device 306 for ease of explanation. However, as will be appreciated more from the description below, in some instances a particular client device 306 may only perform some (but not all) of the operations discussed in relation to the client device 306 in Fig. 6.

The operations 600 may be processing operations performed by hardware, software, firmware or a combination thereof. The shown order is not necessarily indicative of the order of processing.

A first operation 601, performed at the client device 306 for example, may comprise training locally a model $M_{Local}^n$ where n = 1, ..., N, N being the total number of client devices, using the provided model architecture. The provided model architecture may be the first model architecture or a modified version of the first model architecture.

Other client devices may also train locally a model with a respective provided model architectures, which may be the first model architecture or a modified version of the first model architecture.

The server 301 at this time may know which of the client devices will provide a smallest capacity locally trained model, *Msmallest.* The smallest capacity locally trained model *Msmallest* may be the model which will comprise the smallest number of parameters. This is because the server 301 knows which respective model architectures were provided to each of the different client devices 306.

A second operation 602, performed at the server 600, may comprise identifying the client device with the smallest capacity locally trained model *Msmallest.*

In this example, it is assumed that the client device 306 is identified by the server 301 as the client device able to provide the smallest capacity locally trained model *Msmallest.*

Alternatively, the server 301 may receive respective first sets of parameters from each client device and identify therefrom the smallest capacity locally trained model *Msmallest.*

The second operation 602 may be performed prior to, in parallel with, or subsequent to, the first operation 601.

A third operation 603, performed at the client device 306, may comprise transmitting a first set of parameters representing the local trained model $M_{Local}^N$ to the server 301. This may be responsive to a request transmitted by the server 301 to the client device 306 on the basis that the said client device comprises the smallest capacity locally trained model *Msmallest.*

The first set of parameters may comprise weights and/or biases of the smallest capacity locally trained model *Msmallest* on the client device 306.

A fourth operation 604, performed at the server 301, may comprise receiving, from the client device 306 the first set of parameters representing the smallest capacity locally trained model *Msmallest.*

In an example, the fourth operation 604 comprises receiving the first set of parameters representing the smallest capacity locally trained model *Msmallest* from at least one client device. In the case where multiple client devices use the smallest capacity locally trained model, the fourth operation 604 may comprise receiving the first set of parameters representing the smallest capacity locally trained model *Msmallest* from each of the multiple client devices that have trained the smallest capacity model.

A fifth operation 605, performed at the server 301, may comprise transmitting, to each client device (which may not include the particular client device 306 or any client device that has trained the smallest capacity locally trained model *Msmallest*) an indication of the smallest capacity locally trained model *Msmallest*. The indication may comprise, or include, the layer structure and weights and/or parameters of *Msmallest.*

In the example where the fourth operation 604 comprises receiving the first set of parameters representing the smallest capacity locally trained model Msmallest from one client device, the fifth operation 605 comprises transmitting an indication of the smallest capacity locally trained model *Msmallest* (e.g. weights/parameters) received from that one client device. In the example where the fourth operation 604 comprises receiving the first set of parameters from more than one client device (e.g. in the case where multiple client devices have locally trained the smallest capacity locally trained model, *Msmallest*) the fifth operation 605 comprises transmitting an indication (e.g. weights/parameters) of one of the received models.

A sixth operation 606, performed at the or each client device that has not already trained the smallest capacity locally trained model *Msmallest,* may comprise re-training of the smallest capacity locally trained model *Msmallest* based on the locally trained model $M_{Local}^n$ of the client device 306.

In an example, the output of the smallest capacity locally trained model *Msmallest* and the locally trained model $M_{Local}^n$ each comprise a Softmax layer (i.e. the models output softmax probabilities having values between 0 and 1).

In an example, in step 606 the smallest capacity model *Msmallest* is knowledge distilled from $M_{Local}^n$ by training it using the softmax outputs of $M_{Local}^n$. In a specific example, during the sixth operation 606 a training data sample is inputted to the smallest capacity locally trained model *Msmallest* and the locally trained model $M_{Local}^n$. The smallest capacity locally trained model *Msmallest* may be re-trained based on the trained local model $M_{Local}^n$ so that the Softmax output of the smallest capacity locally trained model *Msmallest* is similar or the same as the output of the trained local model $M_{Local}^n$ for the same local training data.

A seventh operation 607, performed at the or each client device that has not already trained the smallest capacity locally trained model, may comprise transmitting a second set of parameters representing the re-trained smallest capacity locally trained model *Msmallest* to the server 301.

An eighth operation 608, performed at the server 301, may comprise receiving, from each client device that has not already trained the smallest capacity locally trained model, the respective second set of updated parameters representing the re-trained smallest capacity locally trained model *Msmallest.*

A ninth operation 609, performed at the server 301, may comprise averaging or aggregating the received first set of parameters from the client device that has already trained the smallest capacity locally trained model *Msmallest* and the second sets of updated parameters. These represent an updated version of the locally trained model *Msmallest_updated,* which is a common model for use by each client device.

A tenth operation 610, performed at the server 301, may comprise transmitting, to each client device (including the client device 306), the averaged or aggregated second sets of updated parameters representing the common model, *Msmallest_updated,* for use by each client device.

An eleventh operation 611, performed at the client device 306, may comprise what is termed local distillation.

The eleventh operation 611 may comprise inputting local training data $D_{Local}^n$ to the common model, *Msmallest_updated,* and re-training locally the trained local model $M_{Local}^n$ so that the output data thereof, which may be one or more Softmax outputs, match or are similar to the Softmax outputs of the common model *Msmallest_updated* for the same input data.

Following this, the respective models at the plurality N of client devices, including the particular client device 306, should exhibit similar behaviour and are ready for the inference stage of operation.

In an example where the client device 306 trains the smallest capacity model, *Msmallest,* in step 601 then steps 606 and 607 may not be performed by the client device 306.

In an example where the client device 306 does not train the smallest capacity model, *Msmallest,* in step 601, step 603 may not be performed by the client device 306. For example, in this case the client device 306 may not receive a request from the server 301 to transmit the parameters of the locally trained model.

In the above example embodiments, it has been assumed that the FIG. 2 operations 200 are performed at the server 301.

In some example embodiments, the FIG. 2 operations 200 may be performed at one or more, or each, of the plurality N of client devices, for example at the particular client device 306. The operations 200 may follow selection of the plurality N of client devices by the client device selector 312 of the server 301. The following operations may be additional or alternative to those shown in FIGs. 2, 3 and 4.

For example, a client device may receive from the server 301 the target training time δ.

For example, the client device may perform operation 201 to determine, based on one or more resources of the client device, whether a first model architecture can be trained locally by the client device within the target training time δ.

For example, the client device may receive from the server 301 an indication of one or more candidate modified versions of the first computational model architecture, e.g. those represented in the neural network pool 304 shown in FIG. 3. In other examples the client device is configured to locally generate modified versions of the first computational model architecture.

For example, the client device may perform operation 202 in that, if it determines that it cannot train the first model architecture within the target training time $\delta$, it may select a modified version of the first computational model architecture from the one or more candidate modified versions. Selection may be based on the resources of the client device, in the same way as described above, e.g. based on estimating a total training time and comparing it against the target training time $\delta$ and, if required, iterating through one or more other candidate modified versions until there is a positive determination.

For example, the client device may perform operation 203 in the sense that "providing" may mean "using" in this context. In an example, the locally determined architecture is trained in step 601 of Fig. 6.

It will be appreciated that when the client device locally determines the model architecture, the server 301 may not have knowledge of the smallest capacity model, *Msmallest,* being used in the plurality of client devices. Consequently, in this case, the smallest capacity model is determined by the server 301. In one example, this includes each client device transmitting parameters of the locally trained model in step 603 and the server 301 determining the smallest capacity model being used by the plurality of client devices. In another example, after selecting a model architecture each client device transmits an indication of the model capacity (e.g. the number of parameters) to the server 301. Based on this information the server 301 determines the client device training the smallest capacity model and only the client device(s) training the smallest capacity model transmits the first set of parameters in step 603 (e.g. in response to the server 301 transmitting a request for their parameters).

For example, the client device may perform the same aggregation or knowledge distillation operations 606, 607, 611 described above.

Example applications in which example embodiments may be involved include one or more of the following.

For example, in industry such as a factory or industrial monitoring plant, training data (and thereafter input data in the inference stage) may represent process information and/or product inspection information, e.g. in the form of image data. In the inference stage, the output of the centralized model, or aggregated model on a given client device, may indicate whether a particular product is defective.

For example, in automated health monitoring, training data (and thereafter input data in the inference stage) may comprise locomotive or motion signatures from inertial sensors carried on, or embedded in, resource-limited body-worn wearables such as smart bands, smart hearing aids and/or smart rings. In the inference stage, the output of the centralized model, or aggregated model on a given client device, may indicate medical conditions such as dementia or early stage cognitive impairment based on activity patterns.

For example, in relation to voice controlled drones for product delivery, training data (and thereafter input data in the inference stage) may represent voice utterances captured across a range of different client devices, such as smartphones, smart earbuds, and/or smart glasses. This may provide more accurate voice command detection by such client devices, even if resource-limited.

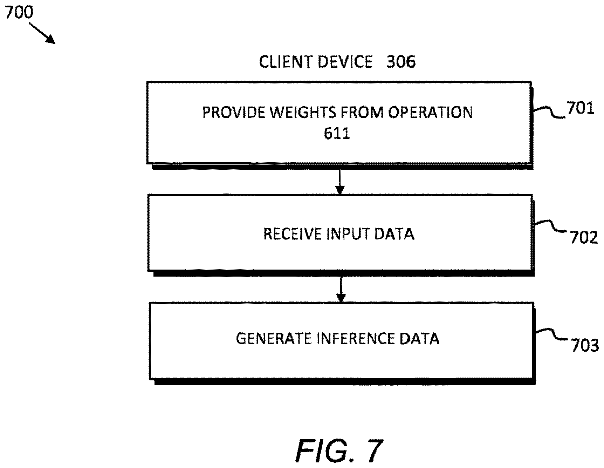

FIG. 7 is a flow diagram of operations 700 that may be performed according to one or more example embodiments. The operations may be performed at the client device 306 and may represent an inference stage of operation. The operations 700 may be processing operations performed by hardware, software, firmware or a combination thereof. The shown order is not necessarily indicative of the order of processing.

A first operation 701 may comprise providing the re-trained weights obtained from the above, eleventh operation 611. As will be appreciated, these re-trained weights are the weights for the client device specific model architecture (e.g. determined using the method of FIG. 5) that replicates the behaviour of the aggregated or averaged smallest capacity model.

A second operation 702 may comprise receiving input data.

A third operation 703 may comprise generating inference data, i.e. output data. In an example, generating inference data comprises inputting the input data (from step 702) into a machine learning model configured according to the re-trained weights (obtained from step 701) and generating output data.

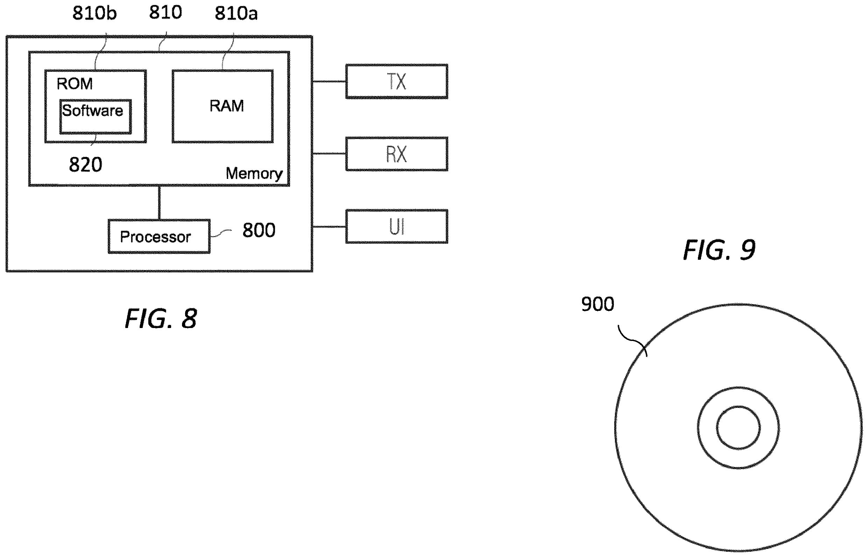

FIG. 8 shows, in overview, a schematic representation of an apparatus according to an embodiment. The apparatus may be configured to perform the operations described herein, for example operations described with reference to any preceding process. The apparatus comprises at least one processor 800 and at least one memory 810 directly or closely connected to the processor. The memory 810 includes at least one random access memory (RAM) 810a and at least one read-only memory (ROM) 810b. Computer-readable instructions, such as computer program code (software) 820 is stored in the ROM 810b. The apparatus may be connected to a transmitter (TX) and a receiver (RX). The apparatus may be connected to one or more sensor devices, for example, one or more of microphones, cameras, temperature sensors, humidity sensors, proximity sensors, motion sensors, inertial measurement sensors, position sensors, heart rate sensor, blood pressure sensor and so on. The apparatus may, optionally, be connected with a user interface (UI) for instructing the apparatus and/or for outputting data. The at least one processor 800, with the at least one memory 810 and the computer program code 820 are arranged to cause the apparatus to at least perform at least the method according to any preceding process by executing the computer program code.

FIG. 9 shows a non-transitory media 900 according to some embodiments. The non-transitory media 900 is a computer readable storage medium. It may be e.g. a CD, a DVD, a USB stick, a blue ray disk, etc. The non-transitory media 900 stores computer program code, causing an apparatus to perform the method of any preceding process by the apparatus executing the computer program code.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

**Claims**

1. Apparatus, comprising:

   means for determining, based on one or more resources of a client device, whether a first computational model architecture can be trained locally by the client device within a target training time;
   means for selecting, if the first computational model architecture cannot be trained locally by the client device within the target training time, a modified version of the first computational model architecture that can be trained by the client device within the target training time; and
   means for providing the selected modified version of the first computational model architecture for local training by the client device.

2. The apparatus of claim 1, further comprising:

   means for estimating a total training time for the client device to train locally the first computational model architecture based on the one or more resources of the client device,
   wherein the determining means is configured to determine if the total training time for the client device is within the target training time.

3. The apparatus of claim 2, the apparatus further comprising:

   means for identifying a plurality of client devices;
   wherein the estimating means is configured, for each client device in the plurality of client devices, to estimate a respective total training time;
   wherein the determining means is configured to determine, for each client device, whether the first computational model architecture can be trained locally by said client device within the target training time;
   wherein the selecting means is configured to select, for each client device that cannot be trained locally within the target training time, a respective modified version of the first computational model architecture that can be trained by the client device within the target training time; and
   wherein the providing means is configured to provide, to each client device that cannot be trained locally within the target training time, the respective modified version of the first computational model architecture.

4. The apparatus of claim 3, further comprising:
   means for providing, to each client device that can train locally the first computational model architecture within the target training time, the first computational model architecture.

5. The apparatus of any of claims 2 to 4, wherein the total training time for a respective client device is estimated based at least partly on characteristics of one or more hardware resources of the respective client device.

6. The apparatus of claim 5, wherein the one or more hardware resources comprise at least one of the following: the respective client device's processing, memory or additional hardware unit resources.

7. The apparatus of claim 5 or claim 6, wherein the total training time for the respective client device is estimated based at least partly on:

   a number of multiply-and-accumulate, MAC, operations required to train the first computational model architecture; and
   an estimated time taken to perform the number of MAC operations using the one or more hardware resources of the respective client device.

8. The apparatus of any of claims 5 to 7, wherein the total training time for the respective client device is estimated further based on one or more characteristics of the first computational model architecture.

9. The apparatus of any of claims 5 to 8, wherein the total training time for the respective client device is estimated further based on data indicative of a current utilization of the one or more hardware resources of the respective client device.

10. The apparatus of claim 9, wherein the total training time for the respective client device is estimated based on use of an empirical model, trained based on resource profiles for a plurality of different client device types, wherein the empirical model is configured to receive as input:

a time to train the identified computational model architecture using the one or more hardware resources of the respective client device; and

the data indicative of current utilization of the one or more hardware resources of the respective client device, wherein the empirical model is configured to provide as output the estimated total training time for the respective client device.

11. The apparatus of any preceding claim, wherein the modified version of the first computational model architecture comprises at least one of the following:

fewer hidden layers than the first computational model architecture;

one or more convolutional layers with a reduced filter or kernel size than corresponding convolutional layers of the first computational model architecture; or

fewer nodes in one or more layers than in corresponding layer(s) of the first computational model architecture.

12. The apparatus of any preceding claim, wherein the selecting means is configured to select the modified version of the first computational model architecture by:

accessing one or more candidate modified versions of the first computational model, each having an associated training complexity;

iteratively testing the candidate modified versions in descending order of complexity until it is determined that the client device can train locally a particular candidate modified version within the target training time;

selecting the particular candidate modified version as the modified version of the first computational model architecture.

13. The apparatus of claim 3, or any claim dependent thereon, further comprising:

means for identifying, a client device of the plurality of client devices with a smallest capacity locally trained computational model;

means for transmitting, to an other client device of the plurality of client devices not having the smallest capacity computational model, an indication of the smallest capacity computational model for local re-training based on their respective locally trained computational model;

means for receiving, from each said other client device, a respective second set of updated parameters representing the re-trained smallest capacity computational model;

means for averaging or aggregating the first set of parameters from the client device having the smallest capacity computational model and the second sets of updated parameters; and

means for transmitting, to each client device, the averaged or aggregated updated parameters.

14. A system comprising:

a first apparatus according to claim 13; and

a second apparatus comprising:

means for receiving, from the first apparatus, the indication of the smallest capacity computational model;

means for re-training the smallest capacity computational model based on a locally trained computational model;

means for transmitting, to the first apparatus, the respective second set of updated parameters representing the re-trained smallest capacity computational model;

means for receiving, from the first apparatus, averaged or aggregated updated parameters representing a common computational model;

means for re-training the locally trained computational model based on the common computational model.

15. A method, comprising:

determining, based on one or more resources of a client device, whether a first computational model architecture can be trained locally by the client device within a target training time;

selecting, if the first computational model architecture cannot be trained locally by the client device within the target training time, a modified version of the first computational model architecture that can be trained by the client device within the target training time; and

providing the selected modified version of the first computational model architecture for local training by the client device.

FIG. 1

200

201

DETERMINING, BASED ON ONE OR MORE RESOURCES OF A CLIENT DEVICE, WHETHER A FIRST MODEL ARCHITECTURE CAN BE TRAINED LOCALLY BY THE CLIENT DEVICE WITHIN A TARGET TRAINING TIME

202

SELECTING, IF THE FIRST MODEL ARCHITECTURE CANNOT BE TRAINED LOCALLY BY THE CLIENT DEVICE WITHIN THE TARGET TRAINING TIME, AN ALTERNATIVE VERSION OF THE FIRST MODEL ARCHITECTURE THAT CAN BE TRAINED BY THE CLIENT DEVICE WTHIN THE TARGET TRAINING TIME

203

PROVIDING THE SELECTED ALTERNATIVE VERSION OF THE FIRST MODEL ARCHITECTURE FOR LOCAL TRAINING BY THE CLIENT DEVICE

*FIG. 2*

*FIG. 3*

FIG. 4

500

501 — IDENTIFYING A PLURALITY OF CLIENT DEVICES

FOR EACH CLIENT DEVICE

502 — ESTIMATING A RESPECTIVE TOTAL TRAINING TIME FOR THE CLIENT DEVICE TO TRAIN LOCALLY A FIRST MODEL ARCHITECTURE

503 — DETERMINING WHETHER THE FIRST MODEL ARCHITECTURE CAN BE TRAINED LOCALLY BY THE CLIENT DEVICE WITHIN A TARGET TRAINING TIME

NEGATIVE DETERMINATION

POSITIVE DETERMINATION

504 — SELECTING A MODIFIED VERSION OF THE FIRST MODEL ARCHITECTURE THAT CAN BE TRAINED BY THE CLIENT DEVICE WITHIN THE TARGET TRAINING TIME

506 — PROVIDING THE FIRST MODEL ARCHITECTURE FOR LOCAL TRAINING BY THE CLIENT DEVICE

505 — PROVIDING THE SELECTED MODIFIED VERSION OF THE FIRST MODEL ARCHITECTURE FOR LOCAL TRAINING BY THE CLIENT DEVICE

*FIG. 5*

## FIG. 6

**600**

SERVER 301

**602** IDENTIFY CLIENT DEVICE WITH SMALLEST CAPACITY LOCALLY TRAINED MODEL M*smallest*

**604** RECEIVE FIRST SET OF PARAMETERS FROM CLIENT DEVICE WITH SMALLEST CAPACITY LOCALLY TRAINED MODEL M*smallest*

**605** TRANSMIT, TO CLIENT DEVICE(S) NOT HAVING M*smallest*, AN INDICATION OF M*smallest*

**608** RECEIVE, FROM EACH CLIENT DEVICE, A RESPECTIVE SECOND SET OF UPDATED PARAMETERS REPRESENTING RE-TRAINED M*smallest*

**609** AVERAGE OR AGGREGATE: THE FIRST SET OF PARAMETERS FOR M*smallest* AND SECOND SETS OF UPDATED PARAMETERS

**610** TRANSMIT, TO EACH CLIENT DEVICE, THE AVERAGED OR AGGREGATED SECOND SETS OF UPDATED PARAMETERS

CLIENT DEVICE 306

**601** TRAIN LOCALLY A MODEL USING PROVIDED MODEL ARCHITECTURE

**603** TRANSMIT FIRST SET OF PARAMETERS REPRESENTING LOCAL TRAINED MODEL

**606** RETRAIN M*smallest* BASED ON LOCAL MODEL

**607** TRANSMIT SECOND SET OF PARAMETERS REPRESENTING RE-TRAINED M*smallest*

**611** PERFORM LOCAL DISTILLATION

700

CLIENT DEVICE 306

PROVIDE WEIGHTS FROM OPERATION 611 — 701

RECEIVE INPUT DATA — 702

GENERATE INFERENCE DATA — 703

*FIG. 7*

EP 4 443 338 A1

810b  810  810a

ROM

Software

RAM

820

Memory

Processor  800

TX

RX

UI

*FIG. 8*

*FIG. 9*

900

# EUROPEAN SEARCH REPORT

Application Number

EP 24 16 4989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mo Fan ET AL: "CENTAUR: FEDERATED LEARNING FOR CONSTRAINED EDGE DEVICES", , 12 November 2022 (2022-11-12), pages 1-15, XP093190388, Retrieved from the Internet: URL:https://arxiv.org/pdf/2211.04175v2 [retrieved on 2024-07-29] | 1-12,15 | INV. G06N3/082 G06N3/098 G06N3/063 ADD. G06N3/0464 |
| A | * abstract * * page 1, left-hand column, line 1 - page 10, right-hand column, last line * * page 14, left-hand column, line 1 - page 15, right-hand column, last line * ----- | 13,14 | |
| A | WO 2022/089751 A1 (NOKIA TECHNOLOGIES OY [FI]) 5 May 2022 (2022-05-05) * abstract; claims 1-33; figures 1-7 * * page 1, line 1 - page 3, line 5 * * page 4, line 1 - page 23, line 4 * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 12 August 2024 | Totir, Felix |

EPO FORM 1503 03.82 (P04C01)

## ANNEX TO THE EUROPEAN SEARCH REPORT
## ON EUROPEAN PATENT APPLICATION NO.

EP 24 16 4989

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2024

| Patent document cited in search report | Publication date | Patent family member(s) | Publication date |
|---|---|---|---|
| WO 2022089751 A1 | 05-05-2022 | US 2023409962 A1 | 21-12-2023 |
| | | WO 2022089751 A1 | 05-05-2022 |

EPO FORM P0459

For more details about this annex : see Official Journal of the European Patent Office, No. 12/82